# EUROPEAN PATENT APPLICATION

(11) **EP 0 820 700 A1**
(43) Date of publication of application: **28.01.1998**
(21) Application number: 96500103.5
(22) Date of filing: 22.07.1996
(51) Int. Cl.: A23B 7/04

(54) **A process for conserving fruits and the like to be subsequently squeezed at any time of the year**

(71) Applicant: MEDIFROST, S.A., 03380 Bigastro (Alicante) (ES)
(72) Inventor: Morales Garcia, Isidoro, Medifrost, S.A., 46004 Valencia (ES)
(74) Representative: Carpintero Lopez, Francisco

(57) **Abstract**

The process is designed to conserve fruits and/or vegetables from which a juice is to be obtained at any time of the year, irrespective of when they were picked. The process is therefore based upon carrying out a number of operative phases lying in first cooling the product, then sorting, classifying, washing and cooling said product, cooling taking place in water at 0°C, which product is then frozen in a fluidised bed tunnel and at a temperature of approximately -40°C, the product being finally packaged in containers and kept in a dynamic cold store for the desired time, whereupon the product is taken out and after being appropriately peeled whilst frozen it is definitively squeezed to obtain the relevant juice. The products or fruits that may be treated with the process are all citrus fruits, and even vegetables such as tomatoes and the like.

## Description

### OBJECT OF THE INVENTION

The invention relates to a process which allows fruits and like products of a certain kind, particularly citrus fruits, to be conserved so that they may later be squeezed to make the relevant juices, which operation can be carried out at any time of the year, irrespective of when they are picked. The process can be used to obtain natural juices of any citrus or like product, whether or not the product is in the picking season.

### BACKGROUND OF THE INVENTION

Juices made of fruits or other products, such as oranges, lemons, grapefruits, peaches, pineapples, tomatoes and the like, are obtained in the particular picking season of the relevant product or fruit, for it would otherwise first be necessary to obtain juice concentrates and then dilute the same in water to obtain the relevant juices, when it is desired to obtain such juices outside the actual picking season of the fruits or products.

On the other hand, generally speaking, elaborated juices are usually obtained by fully squeezing the products, i.e. including the peel, pips, etc., which means that not only the useful part of said products is squeezed, but so are the residues, and among them the peel and the pips, thereby contributing a bitterness and a logically bad taste to the juice made.

This bitterness is clearly eliminated from the juice using chemical means which remove such bad taste or bitterness from the product or juice obtained, although the use of chemical means actually leads to chemical products being contributed to a natural product, namely the juice obtained directly from the relevant fruit.

One of the solutions to the problem aforesaid is undoubtedly previously peeling the fruit before it is squeezed, although this solution is too slow and indeed very difficult in some fruits or vegetables, such as tomatoes, which must be peeled manually, and entails a sharp decrease in production, considerably increasing the final price of the juice.

In other words, current orange and other citrus juice manufacturing processes are primarily aimed at obtaining a concentrated juice which is subsequently stored, and so the usual manner of preparing a juice concentrate is to squeeze the fruit, generally without peeling it, and then removing the pulp, which removal takes place by centrifuging or decanting, followed by dehydration and chemical treatment, as appropriate, in order for the concentrate obtained to be stored in drums at room temperature, or frozen and stored in blocks.

This process is detrimental to the quality of the juice of certain fruits, such as oranges, for cases of aeration and high temperatures ensue that bring about the oxidation and degradation of some nutrients and substances that give orange juice its taste, colour and richness.

The same goes for fruits of other kinds, and even for the obtention of grape juices, where the drawbacks and problems could be deemed to be identical to those aforesaid.

### DESCRIPTION OF THE INVENTION

The process proposed herein is aimed at fully solving the problems aforesaid, i.e. eliminating chemical products conventionally added to juices obtained after the fruit is squeezed with its peel and pips, and on the other hand to successfully squeeze the fruit, whether a citrus fruit or a vegetable, at any time of the year, irrespective of the picking season of the product proper.

Furthermore, with the conservation process the fruit or vegetable can be peeled rationally and relatively quickly, and the juice obtained will therefore lack the bitterness and bad taste which conventionally-made juices have, the above such that the fruits conserved pursuant to the process of the invention may allow the use of quick and inexpensive means for them to be peeled.

More specifically, the process of the invention begins by receiving the fruits and/or vegetables, which are then pre-cooled in suitable chambers, in which the product is submitted to a temperature of around 0°C, and right after such pre-cooling the products are sorted, washed and then cooled in water at 0°C.

These initial process stages will obviously be applied depending on the products at issue, for a citrus fruit, such as an orange or a lemon, will undergo a different treatment than a vegetable, such as a tomato.

When the product or fruit sorting, classifying, washing and cooling steps aforesaid are over, the product or fruit is frozen, this phase being carried out in a fluidised bed tunnel at a temperature of approximately 40°C below zero, and thus when said freezing process or phase is over, the product is stored in large containers or bags in which a vacuum is established, the above so as to provide the frozen fruits proper with a structural rigidity, which rigidity is obtained simply because of the vacuum-packaging.

The containers or bags in which the frozen fruits or products are packaged have a significant structural rigidity which even allows several of these containers or bags to be piled at different heights.

Now then, the fruits or products thus frozen and vacuum-packaged are finally sent to a dynamic cold store which keeps the freezing temperature constant and at full capacity, which store will be fully automatic and may be put to an optimum use as compared with conventional stores, thereby managing to very significantly cut down on freezing costs per product unit treated.

Certain products designed to be squeezed to obtain their relevant juice whenever this is thought fit, whatever the time of the year, can thus be conserved.

In this sense, in the case of a citrus product, such as an orange or lemon, when the juice is to be obtained, it will be sufficient to take such products out of the freezer where they are kept frozen, peel the same whilst frozen, using machines resembling potato peelers in which the product is tipped and suitable blades gradually and evenly wear the product peel, which is what causes the final bitterness when making juices using conventional processes.

When the peel has been removed, the peeled and frozen product thus moves on to its definitive squeezing phase, which takes place by pressing and extracting the juice from the product, the relevant citrus fruit in this case.

In the case of fruits of a different kind, such as vegetables, and particularly tomatoes, to use these, i.e. to squeeze them to obtain the relevant juice, they are scalded once they are taken out of the conservation container in order for the tomato skin to be removed, whereupon only pulp free from the rest of the skin remains, which pulp subsequently undergoes the squeezing phase using the most suitable means, yielding a suitable tomato juice.

Consequently, the process for conserving fruits and the like, particularly citrus products and vegetables such as tomatoes, allows natural juices to be obtained at any time of the year, without any chemical additives being required and avoiding the complicated peeling phase required in juice-making processes whenever bitterness is to be avoided and therefore doing without the chemical products designed to absorb such bitter taste.

In short, the process of the invention carries out the product or fruit washing, pre-cooling and freezing phases, a vacuum-packaging phase then being carried out, thereby to last for approximately 18 months without the fruit being physically or nutritionally damaged, the latter being available at any time of the year with the same properties it had right after picking.

Finally, and as explained hereinbefore, the product is peeled and defrosted, when it is a citrus fruit, and indeed the stone is taken out from fruits having a stone, which removal takes place by pressure, in order finally for squeezing and de-aeration to take place, the juice obtained being immediately packaged, the latter having all the vitamins, sugars, fibres, aromas and essences, or, in other words, all the nutritional properties of the freshly-squeezed product.

### EXAMPLES OF A PREFERRED EMBODIMENT

When a product such as an orange is to be conserved to obtain its juice, a first phase is carried out lying in picking, washing, brushing, pre-cooling and freezing the product.

The orange is then vacuum-stored at a temperature ranging between -25°C and -30°C, the orange being able to remain thus for 18 months, and hence at a point in time during such period of time, the juice of the orange can be obtained by first peeling it whilst frozen, then defrosting the ready-peeled orange and finally squeezing and de-aerating, thereby to obtain a juice that is immediately packaged, the resultant juice or end product having all the vitamins, sugars, fibres, aromas and essences of freshly-squeezed orange juice.

In the case of a grape, for instance, a first phase lies in picking, washing, pre-cooling and freezing the same.

The grape is then frozen and vacuum-stored at a temperature of -25°C, and may remain stored or packaged for 18 months without losing any of its qualities, and it can therefore be used in perfect frozen condition at any time of the year, to allow the user to obtain juice, which is carried out by first eliminating the grape's stalks and sprigs, and the grape is then defrosted and subsequently squeezed and de-aerated, the juice obtained being packaged immediately, the resultant end product being of high quality with the full taste and nutritional properties of a natural grape juice.

## Claims

1. A process for conserving fruits and the like to be subsequently squeezed at any time of the year, characterised by consisting of the following operative phases:
- Pre-cooling the product in suitable chambers, such pre-cooling taking place at a temperature close to 0°C;
- Sorting, classifying, washing and cooling the product pre-cooled at the previous phase, such cooling taking place in water and at a temperature of 0°C;
- Freezing the product treated at the previous phase, such freezing taking place in a fluidised bed tunnel and at a temperature of approximately -40°C;
- Packaging the frozen product in containers which are tightly sealed and vacuum-treated;
- Introducing the containers with the frozen product in an automatically operated dynamic cold store in order to keep the product in a frozen condition indefinitely.

2. A process for conserving fruits and the like to be subsequently squeezed at any time of the year, as in claim 1, characterised in that in the case of citrus or other fruits, juice is obtained by first peeling said product whilst frozen by means of machines where the product is tipped and the product peel is evenly worn by means of suitable blades until it disappears, and finally proceeding to squeeze the peeled citrus fruit, subsequently de-aerating and packaging the juice obtained.

3. A process for conserving fruits and the like to be subsequently squeezed at any time of the year, as in claim 1, characterised in that in the case of vegetables such as tomatoes, peeling takes place by scalding such frozen products, whereupon the skin is easily removed and the frozen pulp remains unaltered for the product to be subsequently squeezed and packaged.
